(19) Europäisches Patentamt
European Patent Office
Office européen des brevets

(11) **EP 3 797 509 B1**

(12) **FASCICULE DE BREVET EUROPEEN**

(45) Date de publication et mention
de la délivrance du brevet:
**05.01.2022 Bulletin 2022/01**

(51) Int Cl.:
**H04N 5/217** *(2011.01)*  **G06T 5/00** *(2006.01)*
**G06T 5/50** *(2006.01)*

(21) Numéro de dépôt: **19727416.0**

(22) Date de dépôt: **03.06.2019**

(86) Numéro de dépôt international:
**PCT/EP2019/064297**

(87) Numéro de publication internationale:
**WO 2020/001922 (02.01.2020 Gazette 2020/01)**

(54) **TRAITEMENT D'UN BRUIT IMPULSIONNEL DANS UNE SÉQUENCE VIDÉO**

VERARBEITUNG VON IMPULSRAUSCHEN IN EINER VIDEOSEQUENZ

PROCESSING OF IMPULSE NOISE IN A VIDEO SEQUENCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.06.2018 FR 1855955**

(43) Date de publication de la demande:
**31.03.2021 Bulletin 2021/13**

(73) Titulaire: **Electricité de France
75008 Paris (FR)**

(72) Inventeur: **PAUL, Nicolas
93100 MONTREUIL (FR)**

(74) Mandataire: **Plasseraud IP
66, rue de la Chaussée d'Antin
75440 Paris Cedex 09 (FR)**

(56) Documents cités:
**EP-A2- 1 550 981    FR-A1- 2 309 095
US-A- 5 543 858    US-B1- 7 769 089**

- **Ali M. Reza: "Adaptive Noise Filtering of Image
Sequences in Real Time", WSEAS Transactions
on Systems , Vol 12(4):189-201, 30 avril 2013
(2013-04-30), pages 043002-043002,
XP055563591, DOI: 10.1117/1.JEI.27.4.043002
Extrait de l'Internet:
URL:https://www.researchgate.net/publicati
on/289284460_Adaptive_noise_filtering_of_i
mage_sequences_in_real_time [extrait le
2019-03-01]**

**Description**

La présente invention concerne un traitement de débruitage d'une séquence vidéo d'images numériques agencées en pixels, notamment pour corriger un bruit d'image de type « poivre et sel» (ou « bruit impulsionnel » ci-après).

On peut considérer néanmoins que ce bruit n'impacte pas un « arrière-plan de l'image » et on peut s'intéresser ainsi au traitement d'image pour l'estimation temps-réel de l'arrière-plan, avec comme applications possible :

- la restauration de séquences vidéo en présence de bruit impulsionnel (également appelé bruit «poivre et sel» qu'on trouve typiquement en présence d'un rayonnement radioactif impactant des photosites d'un capteur, ce qui se traduit par une saturation des pixels correspondants) ;
- une détection de mouvement dans une séquence vidéo, avec suivi d'objet (par exemple en vidéosurveillance), dans laquelle une caméra, éventuellement en mouvement, filme une scène fixe sur laquelle se rajoutent des éléments qui bougent, avec des objets qui se déplacent. Pour détecter ces événements, une solution consiste à estimer l'arrière-plan puis à le soustraire à l'image.

Par la suite, on se concentre sur le cas d'une image en niveau de gris (une seule valeur par pixel), l'extension au cas d'une image couleur (trois canaux « rouge », « vert », « bleu ») étant immédiate en appliquant le même calcul sur les trois canaux.

Il est considéré alors le cas d'un pixel de l'image dont on suit l'évolution temporelle, notée $y(n)$ pour la nième image de la séquence, sans besoin de préciser par la suite les coordonnées spatiales du pixel.

Le cas d'un bruit impulsionnel dû au rayonnement, en gardant en tête les autres applications précédemment mentionnées, peut être traité à partir d'un modèle de dégradation sur un pixel $y(n)$ à un instant $n$ donné. Ce modèle s'écarte du modèle classique de bruit additif centré et peut s'écrire par exemple:

$$y(n) = x + u(n) \text{ avec une probabilité } 1\text{-}p$$

$$y(n) = s \text{ avec une probabilité } p$$

$x$ étant la valeur exacte du pixel en l'absence de rayonnement et de bruit de mesure
$u(n)$ étant un bruit classique de mesure (typiquement bruit blanc Gaussien), d'écart-type $\sigma_u$
$s$ étant la valeur d'un pixel « contaminé », typiquement une saturation
$p$ étant le « taux » de rayonnement

La densité de probabilité $f_Y(y)$ des valeurs prises par $y(n)$ s'écrit dans cet exemple :

$$\mathrm{f}_Y(y) = \frac{1-p}{\sqrt{2\pi}\sigma_u} \exp\left\{ -\frac{(y-x)^2}{2\sigma_u^2} \right\} + p\delta(y-s)$$

$\delta(x)$ étant la fonction « Dirac » de $x$.

Ce modèle, simple, n'est pas le seul possible. En particulier les valeurs contaminées ne sont pas nécessairement constantes, et le rayonnement n'est pas la seule application. On s'intéresse donc plus généralement à des valeurs de pixels ayant une densité de probabilité de la forme:

$$\mathrm{f}_Y(y) = (1-p)\mathrm{f}_U(y-x) + p\mathrm{f}_S(y)$$

$f_S(y)$ étant la distribution des pixels «contaminés» (ou correspondant à un objet en mouvement)
et $f_U(y-x)$ étant la distribution des pixels «non contaminés » (ou correspondant à un arrière-plan fixe).

Par analogie avec le cas d'un bruit de rayonnement, on conserve ci-après cette nomination « contaminés » et «non contaminés » (même si le cas d'images avec rayonnement n'est pas la seule application possible). Dans le cas plus général d'un bruit impulsionnel type poivre et sel, les valeurs de bruit peuvent être à la fois très élevées (pixels blancs, saturation) ou très faibles (pixels noirs), soit une forme bimodale pour $f_S(y)$, par exemple, pour des pixels bruitées oscillant entre 0 et le maximum des valeurs prises par les pixels $I_{max}$ :

$$f_S(y) = \frac{p}{2}\,\delta(y - 0) + \frac{p}{2}\,\delta(y - I_{\max})$$

Des techniques existent pour filtrer ce type de bruit. Les deux principales sont détaillées ci-après.

La méthode la plus simple consiste à utiliser un filtrage temporel, linéaire, des valeurs de chaque pixel. Typiquement, la moyenne glissante ou les filtres temporels linéaires comme l'oubli exponentiel sont fréquemment utilisés. L'oubli exponentiel est défini par :

$$z(n) = (1 - \alpha)y(n) + \alpha z(n - 1)$$

où $\alpha$ règle le facteur d'oubli du filtre (typiquement entre 0.8 et 0.99).

Il converge vers la moyenne $y_{moy}$ des valeurs prises par y(n) au cours du temps. Si $s$ est la valeur moyenne des pixels contaminés, on a :

$$y_{moy} = x + p(s - x)$$

Cette valeur peut s'écarter sensiblement de la valeur exacte $x$ si le taux de rayonnement $p$ est élevé et/ou si la moyenne des valeurs non contaminées $x$ est éloignée de la valeur « contaminée » $s$. Par exemple, pour $p$ = 20%, un pixel normalement noir $x = 0$ et une valeur contaminée en saturation $s=255$ niveaux de gris on a $y_{moy}$ = 51 niveaux de gris, soit un écart d'une cinquantaine de niveaux de gris par rapport à la valeur exacte.

Dans le cas d'une caméra en mouvement ou pouvant changer de facteur de zoom, la dernière sortie du filtre est recalée, afin de suivre les différents mouvements ou changement de zoom de la caméra. L'expression correspondante s'écrit :

$$z(\mathbf{q}, n) = (1 - \alpha).y(\mathbf{q}, n) + \alpha.z(T_n(\mathbf{q}), n - 1)$$

$$z_{restaurée}(\mathbf{q}, n) = \frac{z(\mathbf{q}, n)}{N(\mathbf{q}, n)}$$

Avec :

$y(\mathbf{q},n)$ la valeur de la $n$-ème image brute, pour le pixel à la position $\mathbf{q}$

$z(\mathbf{q},n)$ la valeur de la $n$-ème image filtrée pour le pixel à la position $\mathbf{q}$

$z_{restaurée}(\mathbf{q},n)$ la valeur de la $n$-ème image restaurée pour le pixel à la position $\mathbf{q}$

$T_n(.)$ la transformation estimée entre les images brutes $n$-1 et $n$.

$\alpha$ le facteur d'oubli du filtre (typiquement 0.98, 0.95)

$N(\mathbf{q},n)$ la sortie du filtrage temporel lorsqu'on met en entrée une image constante égale à 1 pour tous les pixels.

Moins formellement, cette équation de filtrage s'écrit :

$$image_{filtrée} = (1 - \alpha).image_{brute} + \alpha.image_{filtrée,précédente,recalée}$$

$$image_{restaurée} = \frac{image_{filtrée}}{normalisation}$$

Ce traitement permet d'éliminer l'effet du rayonnement (effet de « neige » sur l'image). Cependant, on peut montrer que l'image ainsi restaurée ne converge pas exactement vers l'image qu'on aurait obtenue en l'absence de rayonnement.

Une autre technique connue est le filtre médian.

Il est connu qu'il est intéressant de choisir des traitements qui convergent non pas vers la moyenne mais vers la médiane des valeurs prises par $y(n)$. En effet si le taux de bruit impulsionnel est inférieur à 50% la médiane des valeurs prises par $y(t)$ est située dans le support de la distribution de $x + u(t)$.

Cette médiane est indépendante de l'écart entre la valeur contaminée s et la valeur exacte $x$.

Dans le cas d'un bruit « poivre et sel », cette médiane est égale à $x$. Dans le cas de pixel « contaminé » toujours supérieure à la médiane on montre que cette médiane est donnée par :

$$y_{\mathrm{med}} \approx x + \sqrt{\frac{\pi}{2}}\, \sigma_u \frac{p}{1-p}$$

soit un faible écart $y_{\mathrm{med}} - x < 0.32\sigma_u$ pour des taux de contamination observés en pratique (par exemple $p < 20\%$).

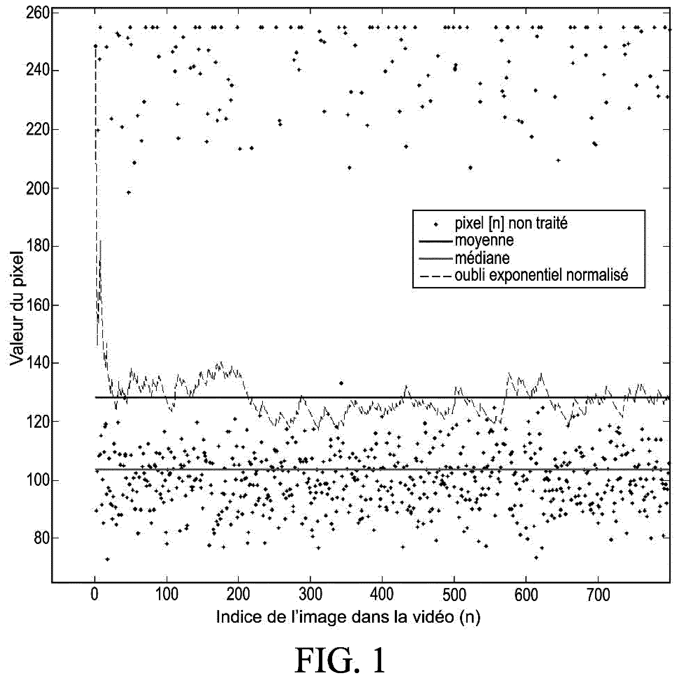

La différence entre la moyenne et la médiane est illustrée sur la figure 1, représentant un exemple d'évolution temporelle des valeurs prises par un pixel avec un taux de contamination de 20%.

Pour calculer cette médiane au cours du temps, les traitements habituels consistent, pour chaque pixel, à calculer la médiane obtenue sur des fenêtres temporelles glissantes. Sur chaque fenêtre la médiane peut être par exemple calculée par des algorithmes de tri (on trie les M valeurs prises par le pixel dans la fenêtre temporelle puis on prend la valeur du milieu) ou à partir de l'histogramme des valeurs prises par le pixel dans la fenêtre.

Cette approche présente cependant trois inconvénients :

- la mémoire requise est importante (taille des fenêtres, 50 images pour des fenêtres temporelles de deux secondes et un débit vidéo de 25 images/secondes) ;
- le traitement, qui doit être appelé pour chaque pixel et pour chaque nouvelle image (à chaque nouvelle image correspond la mise à jour des fenêtres temporelles), est particulièrement complexe ;
- l'extension au cas d'une caméra en mouvement et/ou faisant varier le facteur de zoom est impossible: il faudrait pour cela recaler l'ensemble des images de la fenêtre glissante sur la dernière image, puis calculer la médiane temporelle de chaque pixel. La mémoire requise et le temps de traitement deviennent incompatibles avec une application temps-réel.

Le papier "Adaptive Noise Filetring of Image Sequences in Real Time" par A. Reza publié dans WSEAS Transactions on Systems, Vol 12(4), en Avril 2013 divulgue un procédé de traitement de données d'une séquence vidéo comportant un bruit impulsionnel caractérisé en ce qu'il comporte, pour le filtrage du bruit, l'application d'un filtre Kalman récursif ; ledit procédé est efficace contre le bruit impulsionnel, mais sa mise en œuvre nécessite des moyens de calcul importants.

La présente invention vient améliorer cette situation.

Elle propose à cet effet un procédé de traitement de données d'une séquence vidéo comportant du bruit, par exemple un bruit impulsionnel, la séquence vidéo étant formée d'une succession d'images, le procédé comportant, pour le filtrage du bruit, l'application d'un filtrage récursif dit ci-après « filtrage du signe » et donné par :

$$z(n) = z(n-1) + \Delta \ \ \text{si} \ y(n) > z(n-1)$$

$$z(n) = z(n-1) - \Delta \ \ \text{si} \ y(n) < z(n-1)$$

$$\text{Et } z(n) = z(n-1) \ \ \text{si} \ y(n) = z(n-1)$$

où :

- $y(n)$ désigne un élément de la $n$-ième image dans la succession, non traitée par l'application du filtrage du signe,
- $z(n\text{-}1)$ désigne un élément de position correspondante à $y(n)$, de la $(n\text{-}1)$-ième image dans la succession et traitée par l'application du filtrage du signe,
- $z(n)$ désigne un élément de position correspondante à $y(n)$, de la $n$-ième image dans la succession et traitée par l'application dudit filtrage du signe, et
- $\Delta$ est un coefficient strictement positif.

Comme on le verra dans les exemples de résultats présentés plus loin, un tel filtre offre l'avantage d'un filtre médian par rapport à un filtre temporel classique, qui est de ne pas dégrader par une moyenne les images traitées.

Dans une réalisation, les éléments $y(n)$, $z(n-1)$ et $z(n)$ sont des pixels d'image, de même position, et les images de la succession précitée sont traitées pixel par pixel. Alternativement, un traitement par blocs de pixels adjacents peut être appliqué pour faire converger encore plus vite le traitement selon le cas d'usage.

Le bruit précité peut être impulsionnel, par exemple de type « poivre et sel » ou « neige ».

Le bruit impulsionnel peut résulter par exemple d'un rayonnement radioactif reçu par un capteur d'une caméra filmant la séquence vidéo précitée.

Typiquement dans ce cas, le bruit impulsionnel est souvent de type « neige ».

Avec ou sans bruit de type « poivre et sel» ou « neige », le traitement de l'invention peut être utilisé dans des images de séquence vidéo qui présentent des objets en mouvement devant un arrière-plan d'intérêt. Dans ce cas, ces objets en mouvement dans les images (poussières ou autres) peuvent être traités comme du bruit, par le procédé au sens de l'invention.

Dans le cas d'une caméra en mouvement, ou avec variations éventuelles du facteur de zoom, on peut prévoir, avec par exemple un module d'estimation de mouvement dans des images successives, d'intégrer le déplacement apparent comme entrée du filtrage du signe.

Ainsi, en termes plus génériques, dans un procédé où la succession d'images comporte un mouvement apparent d'un arrière-plan d'image dans la succession d'images,
le procédé peut comporter en outre :

- intégrer le mouvement apparent comme entrée du filtrage du signe.

Un tel « mouvement apparent » peut être causé par l'une au moins des situations parmi les suivantes :

- la caméra est mobile et filme une séquence fixe, et
- le zoom de la caméra est variable dans le temps.

Avec les notations données aux pixels ci-dessus, l'application du filtrage du signe en cas de tel mouvement apparent peut alors être donnée par :

$$z(\mathbf{q}, n) = z(T_n(\mathbf{q}), n-1) + \Delta \text{ si } y(\mathbf{q}, n) > z(T_n(\mathbf{q}), n-1)$$

$$z(\mathbf{q}, n) = z(T_n(\mathbf{q}), n-1) - \Delta \ \text{ si } y(\mathbf{q}, n) < z(T_n(\mathbf{q}), n-1)$$

$$z(\mathbf{q}, n) = z(T_n(\mathbf{q}), n-1) \text{ si } y(\mathbf{q}, n) = z(T_n(\mathbf{q}), n-1)$$

avec $z(\mathbf{q}, n)$ les valeurs prises par la $n$-ième image au pixel de coordonnées vectorielles q et $T_n$ l'estimation de la transformation entre l'image précédente de rang $n$-1 et l'image courante de rang n dans la succession.

Préférentiellement, il peut être avantageux, pour de premières images de la succession jusqu'à une $n_0$-ième image, d'appliquer un filtre temporel à facteur d'oubli, sans appliquer de filtrage du signe, ce filtre temporel à facteur d'oubli étant donné par:

$$z(\mathbf{q}, n) = \frac{z_{\text{temp}}(\mathbf{q}, n)}{N(\mathbf{q}, n)}$$

avec $z_{\text{temp}}(\mathbf{q}, n) = (1 - \alpha).y(\mathbf{q}, n) + \alpha.z_{\text{temp}}(T_n(\mathbf{q}), n-1)$
et $N(\mathbf{q}, n) = (1 - \alpha) + \alpha.N(T_n(\mathbf{q}), n-1)$,
$z_{\text{temp}}(\mathbf{q}, n)$ étant une variable temporaire, et $\alpha$ étant un facteur d'oubli compris entre 0 et 1,
$z(\mathbf{q}, n)$ étant alors les valeurs prises par la $n$-ième image au pixel de coordonnées vectorielles $\mathbf{q}$, et $T_n$ l'estimation d'une transformation par mouvement éventuel entre l'image précédente de rang $n$-1 et l'image courante de rang $n$ dans la succession, avec n inférieur à $n_0$.

En absence de mouvement entre des images successives jusqu'à l'image $n_0$, ce filtre temporel à facteur d'oubli peut être simplement donné par:

$$z(n) = \frac{z_{\text{temp}}(n)}{1-\alpha^n},$$

avec

$$z_{\text{temp}}(n) = (1 - \alpha)y(n) + \alpha z_{\text{temp}}(n - 1)$$

$z_{\text{temp}}(n)$ étant une variable temporaire, et $\alpha$ étant un facteur d'oubli compris entre 0 et 1.

Ensuite, au moins pour des images de la succession qui suivent une $n_0$-ième image, on peut appliquer la combinaison du filtrage du signe à un filtre temporel à facteur d'oubli, le résultat de cette combinaison étant donné par:

$$s(n) = \frac{w_{\text{temp}}(n)}{1 - \beta^{n-n_0+1}}$$

$w_{\text{temp}}(n)$ étant une variable temporaire donnée par :

$$w_{\text{temp}}(n) = (1 - \beta)z(n) + \beta w_{\text{temp}}(n - 1),$$

, où $z(n)$ est le résultat de l'application du filtrage du signe, et $\beta$ étant un facteur d'oubli compris entre 0 et 1.

Un paramètre important à choisir est la valeur du coefficient $\Delta$. Préférentiellement, ce choix est fonction d'une valeur maximale Imax de niveau de couleur prise par les éléments d'image. Des tests montrent que le coefficient $\Delta$ peut être inférieur à 20 Imax/255. Préférentiellement, le coefficient $\Delta$ est compris entre 0 et 5 Imax/255 (soit entre 0 et 5 si Imax=255 comme le plus souvent).

On entend par « niveau de couleur » aussi bien ici un niveau de gris que de rouge, vert ou bleu (RGB) quantifiés sur 256 valeurs habituellement.

La présente invention vise aussi un programme informatique comportant des instructions pour la mise en œuvre du procédé ci-avant, lorsque ces instructions sont exécutées par un processeur. Elle vise aussi un support d'informations (une mémoire par exemple, de type USB ou autre) stockant les instructions d'un tel programme.

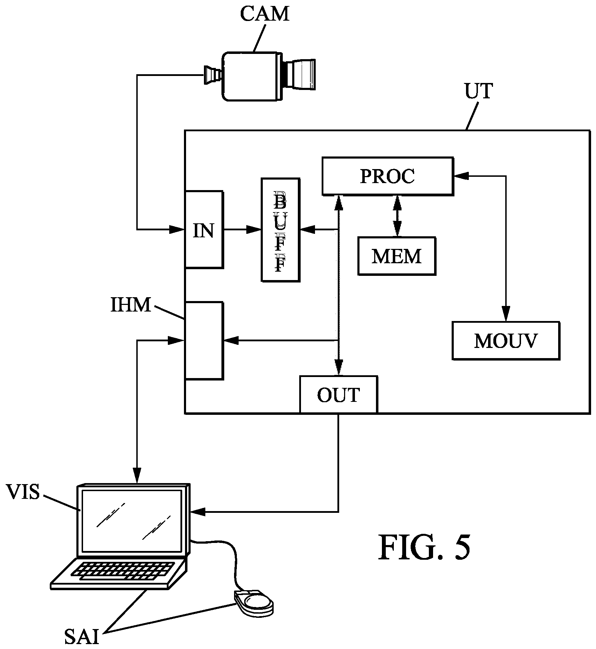

L'invention vise aussi un dispositif comportant une unité de traitement pour la mise en œuvre du procédé ci-avant (décrit plus loin en référence à la figure 5).

D'autres avantages et caractéristiques de l'invention apparaitront à la lecture de la description détaillée de modes de réalisation de l'invention, présentés à titre d'exemples illustratifs, et à l'examen des dessins annexés sur lesquels :

- La figure 1 illustre la médiane et moyenne temporelle des valeurs prises par un pixel susceptible d'être contaminé par un bruit impulsionnel (p=20%, $\sigma_u$=10 niveaux de gris);
- La figure 2 montre l'évolution temporelle d'un pixel susceptible d'être contaminé (p=20%, $\sigma_u$=10 niveaux de gris) et des sorties du traitement par filtre du signe (avec $\Delta$=3) ;
- La figure 3 illustre les distributions observée et théorique des valeurs prises par la sortie du traitement par filtre du signe utilisé pour les résultats de la figure 2 ($\Delta$=3) ;
- La figure 4 compare le traitement par filtre du signe ($\Delta$= 3) au traitement hybride utilisant deux filtres temporels à facteur d'oubli et le filtre du signe ($\Delta$= 3, $n_0$ = 25 images, $\alpha$ = $\beta$ = 0,95) sur un pixel parfois contaminé ($\sigma_u$ = 10, $p$ = 20%) ;
- La figure 5 illustre un dispositif pour la mise en œuvre de l'invention, dans un exemple de réalisation ;
- La figure 6 illustre un traitement au sens de l'invention, appliqué dans un exemple de réalisation à une séquence d'images avec mouvement ;
- La figure 7 illustre un traitement au sens de l'invention, appliqué dans un exemple de réalisation avec deux filtres à facteur d'oubli, préalablement (Filt temp1) au filtre du signe (FILT SGN) et concomitamment (Filt temp2) au filtre du signe.

L'invention propose une approche récursive comme suit: en considérant les valeurs prises par un seul pixel, notées y($n$) pour l'image $n$ , cette approche consiste à calculer la suite $z(n)$ définie par :

$$z(n) = z(n-1) + \Delta \times \mathrm{signe}(y(n) - z(n-1))$$

avec signe(0)=0.

Dans la suite, on appelle cette approche « traitement par filtre du signe » ou « médian temporel rapide ».

$\Delta$ est un paramètre de l'algorithme dont le réglage traduit un compromis entre la vitesse de convergence et l'écart-type résiduel après convergence. Son réglage est discuté ci-après.

Les avantages de ce filtre du signe sont multiples.

La mémoire requise reste très faible : seulement deux images sont utilisées pour calculer la sortie à l'instant $n$ : l'image sortie précédente $z(n$ - $1)$ et l'image brute courante $y(n)$. L'implémentation temps-réel est donc immédiate.

La complexité est quasi-nulle : pour chaque nouvelle image et pour chaque pixel, on compte une addition, une multiplication et une comparaison (sur le calcul de signe).

Cette approche s'adapte avantageusement et sans difficulté au cas particulier d'une caméra en mouvement, pour lequel l'équation de récurrence devient :

$$z(\mathbf{q}, n) = z(\mathrm{T}(\mathbf{q}), n-1) + \Delta \times \mathrm{signe}(y(\mathbf{q}, n) - z(\mathrm{T}(\mathbf{q}), n-1))$$

avec $z(\mathbf{q}, n)$ les valeurs prises par l'image à l'instant $n$ au pixel de coordonnées vectorielles $\mathbf{q}$ et T l'estimation de la transformation entre l'image précédente et l'image courante. Des méthodes d'estimation de cette transformation sont décrites dans la littérature pour une translation et pour la combinaison d'une translation, d'une rotation et d'un changement du facteur de zoom.

Ainsi un préalable au traitement du signe peut consister à définir si la caméra est en mouvement ou non:

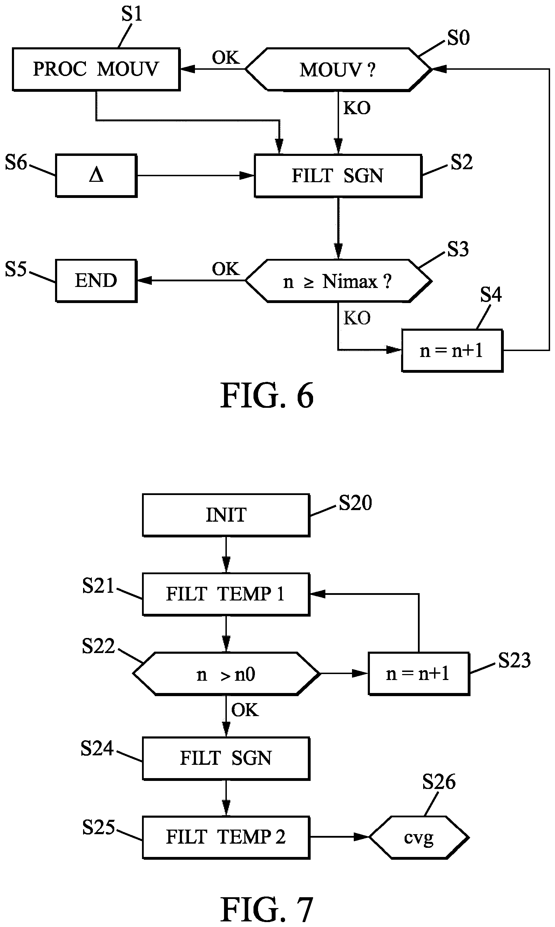

- si la caméra est fixe, on n'applique que le traitement par le filtre du signe ; et
- si la caméra est censée se déplacer, et/ou si le facteur de zoom peut varier (ou l'éclairage), on applique, en référence à la figure 6, une étape préalable S1 d'estimation du mouvement de la caméra : on calcule, de manière connue, le déplacement de la caméra à partir des images successives et ce déplacement, obtenu ainsi à l'étape S1, est alors intégré comme entrée du traitement par le filtre du signe à appliquer à l'étape S2.

Par exemple, on peut prévoir un bouton binaire à disposition d'un utilisateur pour déterminer si la séquence a été filmée avec une caméra fixe ou une caméra en mouvement (étape S0), ce qui, dans ce dernier cas, entraine le lancement de l'algorithme d'estimation du mouvement (étape S1), son résultat étant pris comme entrée à chaque itération de l'étape S2, de façon itérative sur n jusqu'à Nimax (boucles des étapes S3 et S4, jusqu'à S5 pour n=Nimax).

Dans l'équation générale précédente $z(n) = z(n$ - $1) + \Delta \times$ signe $(y(n)$ - $z(n$ - $1))$ , le coefficient $\Delta$ caractérise l'importance accordée au signe de la différence entre l'image courante $y(n)$ et l'image précédente $n$-1 qui a été traitée récursivement par le procédé au sens de l'invention : $z(n$ - $1)$.

Le réglage de la valeur de ce coefficient $\Delta$ peut s'effectuer comme détaillé ci-après. Ce réglage résulte d'un compromis entre le temps de convergence du filtre récursif de signe et la pertinence finale de la sortie du filtre qui peut par exemple être estimée par la variance après convergence.

Par « temps de convergence » on entend à la fois :

- le temps de convergence au démarrage des traitements,
- le temps d'adaptation aux mouvements de caméra ou aux variations de zoom (le pixel correspondant en effet à un nouvel élément de scène),
- le temps d'adaptation à un changement de scène, typiquement un changement d'éclairage.

Si on souhaite privilégier un temps de convergence/d'adaptation rapide on choisit une valeur élevée du coefficient $\Delta$.

Si on souhaite privilégier une variance résiduelle faible on choisit une valeur faible pour le coefficient $\Delta$.

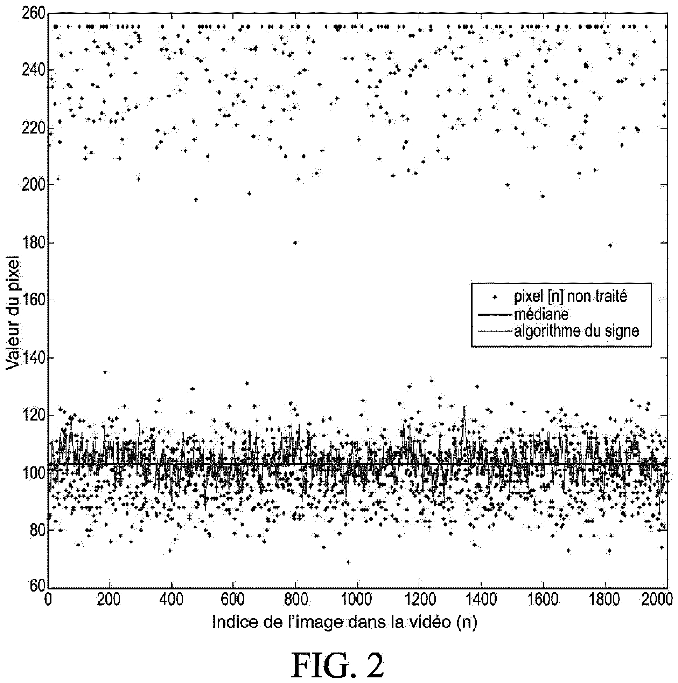

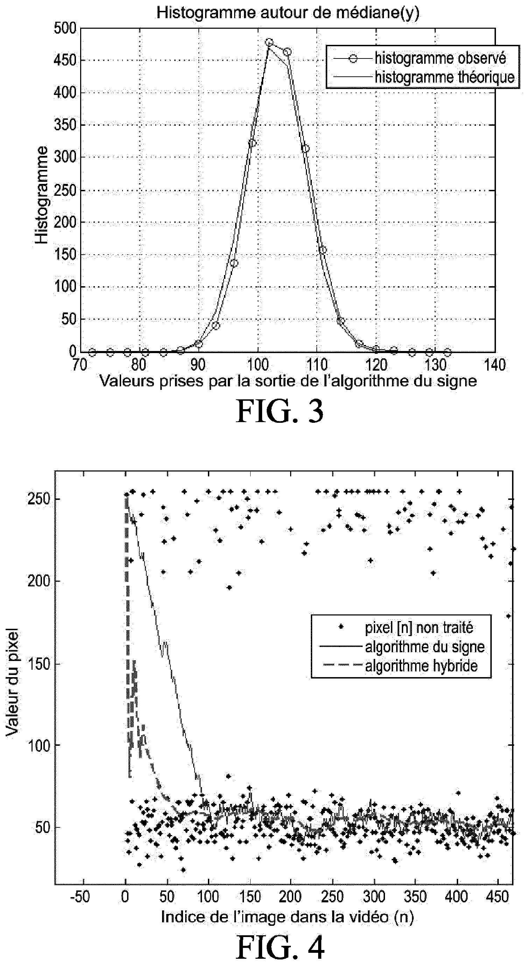

Les figures 2 et 3 montrent respectivement l'évolution temporelle et la distribution des valeurs prises par la sortie du traitement par le filtre du signe. Cette distribution est très proche de la distribution théorique.

Typiquement, en sortie du filtre de signe, la variance résiduelle après convergence est donnée par :

$$Vr \approx \sqrt{\frac{\pi}{8}} \times \frac{\Delta \sigma_u}{1-p}$$

Le temps de convergence pour un changement de médiane d'amplitude A est donné par :

$$Tc \approx \left| \frac{A}{\Delta(1-p)} \right|$$

Ici, le temps de convergence est donné pour un bruit impulsionnel « poivre et sel» assimilé en noir ou blanc. Dans le cas de pixel contaminé en blanc seulement, on aura :

A/∆(1-2p) dans le cas d'une chute de la valeur médiane, et
A/ ∆ dans le cas d'une hausse de la valeur médiane.

Les valeurs prises par les pixels de l'image sont typiquement entre 0 et 255 (cas de valeurs codées sur 8 bits). Dans ce cas, il apparait de façon empirique qu'un bon choix de valeur pour le coefficient ∆ peut être compris entre 0 et 20, et préférentiellement entre 0 et 5. Plus généralement, si les valeurs prises par les pixels sont entre 0 et Imax, le coefficient ∆ pourra être choisi entre 0 et 20*Imax/255, préférentiellement entre 0 et 5*Imax/255.
On peut fixer le coefficient ∆ comme entrée du traitement par filtre du signe à l'étape S2, au cours d'une étape d'initialisation S6 illustrée sur la figure 6, et il est possible de le modifier si besoin en cas d'insatisfaction de l'image obtenue ou de son temps d'obtention. Typiquement, le traitement peut être tel qu'une valeur élevée est choisie à l'initialisation (∆=5 par exemple) puis une valeur faible (∆=1 par exemple) après début de convergence. Le début de convergence peut être défini en fonction d'une valeur de fenêtre glissante $n_1$ (un nombre d'images successives $n_1$) pour basculer de ∆=5 à ∆=1.
On peut comparer les performances du filtre au sens de l'invention avec le filtre à médiane sur fenêtre glissante.
L'écart-type de la sortie du traitement par application du filtre du signe peut en effet être comparé à l'écart-type du calcul classique de la médiane sur une fenêtre glissante de taille *N*. Celui-ci peut être approximé par le résultat asymptotique suivant :

$$\sigma_N = \frac{1}{f_Y(y_{\mathrm{med}})\sqrt{4N}}$$

Ce qui donne, dans ce contexte :

$$\sigma_N \approx \sqrt{\frac{\pi}{2N}} \frac{\sigma_u}{1-p}$$

Pour des valeurs données de bruit $\sigma_u$ (écart-type du bruit additif « classique », non impulsionnel) et de taux de contamination *p* on peut en déduire la taille minimale des fenêtres glissantes qu'il faudrait utiliser pour obtenir la même performance que l'algorithme du signe proposé ici :

$$N = \frac{\sqrt{2\pi}\sigma_u}{\Delta(1-p)}$$

Avec par exemple $\sigma_u$ = 10 niveaux de gris et *p* = 20%, on trouve que la taille de la fenêtre glissante nécessaire pour obtenir le même écart-type résiduel est de :

- *N* = 10 images, pour ∆=3,
- *N* = 30 images, pour ∆=1, et
- *N* = 60 images, pour ∆=0,5.

On peut alors reprocher à ce traitement de l'invention le compromis à faire entre, d'une part, le temps de convergence et la variance résiduelle après convergence.
Néanmoins, il est possible d'avoir recours à des traitements hybrides pour obtenir une variance résiduelle faible sans pour autant impacter le temps de convergence.
Une première solution consiste à démarrer les traitements avec un filtre linéaire, typiquement un oubli exponentiel normalisé puis, après un temps d'initialisation $n_0$ de quelques images, pour passer ensuite au traitement par application du filtre du signe. Ce type d'amélioration peut être utile dans le cas d'une caméra fixe, où l'on souhaite une variance résiduelle faible sans pénaliser le temps de convergence initial. Cette approche est moins efficace en revanche lorsqu'il convient de s'adapter rapidement à une variation de scène (et/ou une variation d'éclairage ou de zoom notamment).

Afin de réduire la variance résiduelle, une deuxième solution consiste à utiliser un autre filtrage linéaire temporel, appliqué sur z(t), typiquement avec un oubli exponentiel. Si $\beta$ est le coefficient de ce second filtre (compris entre 0 et 1), celui-ci permet de multiplier la variance résiduelle par $\frac{1-\beta}{1+\beta}(<1)$ (si on suppose que les sorties du filtre du signe sont décorrélées dans le temps).

Cette amélioration peut être particulièrement utile dans le cas d'une scène susceptible de bouger, afin :

⚬ de garantir le suivi de la scène (éclairage) et/ou de la caméra (avec un $\Delta$ élevé), et
⚬ de garantir une variance résiduelle faible (avec le second filtre exponentiel)

Les deux améliorations peuvent être utilisées au cours d'un même traitement.

Le traitement hybride avec les deux améliorations est résumé ci-après, en référence à la figure 7, dans le cas d'une caméra fixe, pour un pixel donné de valeur $y(n)$ à la nième image :

Pour n=0, application d'une étape S20 d'initialisation:

$$y(0) = 0, \quad z_{\text{temp}}(0) = 0, \quad w_{\text{temp}}(n_0) = 0$$

Pour $n = 1$ à $n_0$ (boucle des étapes S22 et S23), application à l'étape S21 d'un premier filtre temporel à facteur d'oubli, sans filtre du signe :

$$z_{\text{temp}}(n) = (1 - \alpha)y(n) + \alpha z_{\text{temp}}(n - 1)$$

$$\text{Et en sortie } s(n) = \frac{z_{\text{temp}}(n)}{1-\alpha^n}$$

Pour $n > n_0$ (et jusqu'à convergence à l'étape S26), application aux étapes S24 et S25 du filtre du signe et respectivement d'un deuxième filtre temporel à facteur d'oubli au résultat du filtre du signe:

$$z(n) = z(n - 1) + \Delta \times \text{signe}(y(n) - z(n - 1))$$

$$w_{\text{temp}}(n) = (1 - \beta)z(n) + \beta w_{\text{temp}}(n - 1)$$

Et en sortie

$$s(n) = \frac{w_{\text{temp}}(n)}{1-\beta^{n-n_0+1}}$$

Les performances du traitement par application du filtre du signe et du traitement hybride avec améliorations (performances bien meilleures dans ce deuxième cas) sont illustrées sur la figure 4.

Le recours au traitement hybride et le réglage de ses paramètres (temps d'initialisation et facteurs d'oubli exponentiel) dépendent du type d'application. Pour une caméra fixe ou bougeant lentement une petite valeur du coefficient $\Delta$ est suffisante (0,5 ou 1 niveau de gris), à condition d'initialiser le traitement avec un oubli exponentiel normalisé ($\alpha$ = 0,9 par exemple). Le second filtre ($w_{\text{temp}}$) n'est pas forcément utile.

Pour une caméra en mouvement, ou une scène variable (changement d'éclairage par exemple), le traitement doit constamment s'adapter. On pourra choisir un coefficient élevé jusqu'à $\Delta$= 5 niveau de gris, suivi d'un oubli exponentiel $\beta$ = 0,9. Le filtre d'initialisation ($z_{\text{temp}}$) n'est pas forcément utile.

Pour un réglage optimum des paramètres, on peut s'aider des calculs comparant la variance résiduelle et le temps de convergence lors d'un changement de médiane d'amplitude A (typiquement dû à une variation de l'éclairage de la scène filmée).

En effet, dans ce cas, le temps de convergence (pour un bruit poivre et sel de type « pixel noir ou blanc » (pas blanc seulement, type « neige »)) pour un changement de médiane d'amplitude A (temps pour atteindre $\mu$A) est donné par :

$$Tc \approx \left| \frac{A}{\Delta(1-p)} \right| + \frac{\log(1-\mu)}{\log \beta}$$

La variance résiduelle après convergence peut être approximée par :

$$Vr \approx 3 * \sqrt{\frac{\pi}{8}} \times \frac{\Delta \sigma_u}{1-p} \times \frac{1-\beta}{1+\beta}$$

En référence maintenant à la figure 5, un dispositif au sens de l'invention comporte une unité de traitement UT comprenant au moins :

- une interface d'entrée IN pour recevoir d'une caméra CAM, ou encore d'un serveur distant (ou une entité distante via un réseau de communication), un signal représentatif de pixels d'images successives formant une séquence vidéo (en plan fixe et zoom et éclairage fixes, ou variables) ;

- une mémoire tampon BUFF pour stocker temporairement les données d'image (et typiquement la dernière image reçue (brute) et la dernière image traitée, ainsi que, en cas de mouvement, l'avant-dernière image reçue);

- une mémoire MEM pour stocker éventuellement d'autres variables temporaires et surtout pour stocker des codes d'instructions d'un programme informatique au sens de l'invention, ainsi éventuellement que des valeurs de paramètres de filtres (facteurs d'oubli, coefficient $\Delta$, nombre d'images initiales $n_0$, Nimax, etc.) ;

- une interface homme machine IHM pour entrer les valeurs de paramètres de filtres, cette interface étant reliée à des moyens de saisie SAI (clavier, souris, écran tactile, commande vocale, etc.) et de visualisation VIS (écran, écran tactile, etc.) ;

- un processeur PROC pour lire de la mémoire MEM les codes d'instructions du programme informatique et appliquer le traitement au sens de l'invention aux données d'images du tampon BUFF, le cas échéant en s'appuyant sur un module d'estimation de mouvement MOUV (estimation des mouvements de la caméra par translation, rotation, facteur de zoom) si la position de la caméra ou ses réglages sont censés être variables ;

- une interface de sortie OUT pour délivrer les images débruitées qui peuvent être visualisées sur les moyens VIS par exemple.

Le traitement se fait pixel par pixel pour fournir une image restaurée sur la valeur des pixels à l'image n.

La sortie du traitement peut présenter plusieurs options :

- estimer en temps-réel simplement l'arrière-plan de la séquence vidéo ;
- détecter et éventuellement extraire un ou plusieurs objets en mouvement dans les images, par soustraction de l'arrière-plan ainsi obtenu à l'image brute ;
- et/ou encore estimer un bruit impulsionnel de type poivre et sel ou neige dans la séquence vidéo ;
- le cas échéant, restaurer la séquence en cas de présence de ce bruit impulsionnel ; et
- éventuellement délivrer les images de cet arrière-plan ou les images débruitées, via le moyen de visualisation VIS ou via une interface de communication (non représentée) des données d'images ainsi dé-bruitées vers un site distant.

La restauration vise alors à effectuer l'opération suivante :

$$\text{image}_{\text{restaurée}} =$$

$$\text{image}_{\text{restaurée,précédente,recalée}} + \Delta \times \text{signe}\left\{\text{image}_{\text{brute}} - \text{image}_{\text{restaurée,précédente,recalée}}\right\}$$

Deux filtres classiques (oubli exponentiel) peuvent être utilisés en complément de ce traitement :

- un premier filtre peut être utilisé pour accélérer le temps de convergence initial de ce traitement ;
- un deuxième filtre peut être utilisé pour réduire la variance résiduelle.

On compte donc quatre combinaisons possibles de filtres :

- simple filtre du signe
- filtre du signe avec filtre d'initialisation
- filtre du signe avec filtre de réduction de variance résiduelle
- filtre du signe avec filtre d'initialisation et filtre de réduction de variance résiduel.

On détaille ci-après la deuxième et la quatrième combinaison.

Ici, on utilise l'estimation de la transformation géométrique entre l'image brute $n$-1 et l'image brute n notée $T_n(\mathbf{q})$. En notant toujours les images d'entrée $y(\mathbf{q},n)$ et les images de sortie $z_{\text{restaurée}}(\mathbf{q},n)$, on peut appliquer les étapes ci-après :

Initialisation : $z(\mathbf{q},0) = 0$ ; $z_{\text{restaurée}}(\mathbf{q},0) = 0$ ; $T_1(\mathbf{q}) = \mathbf{q}$ (transformation identité) ;
$N(\mathbf{q},0) = 0$ (image de normalisation)

Pour n=1 à $n_0$ :

$$z(\mathbf{q}, n) = (1 - \alpha).\, y(\mathbf{q}, n) + \alpha.\, z(T_n(\mathbf{q}), n - 1)$$

$$N(\mathbf{q}, n) = (1 - \alpha) + \alpha.\, N(T_n(\mathbf{q}), n - 1)$$

Et

$$z_{\text{restaurée}}(\mathbf{q}, n) = \frac{z(\mathbf{q},n)}{N(\mathbf{q},n)}$$

Pour n>$n_0$ :

$$z_{\text{restaurée}}(\mathbf{q}, n)$$
$$= z_{\text{restaurée}}(T_n(\mathbf{q}), n - 1) + \Delta \times \text{signe}\left\{y(\mathbf{q}, n) - z_{\text{restaurée}}(T_n(\mathbf{q}), n - 1)\right\}$$

On peut choisir comme valeurs d'entrée :

- $n_0$ = 25 images (1 seconde), on peut monter jusqu'à 50 images (2 secondes)
- $\Delta$ = 3 (entre 0 et 10)

Cette valeur de $\Delta$ correspond à des valeurs de pixels variant entre 0 et 255. Pour le cas de pixel variant entre 0 et 1 il faut multiplier par 1/255. Pour des pixels variant entre 0 et MAX il faut multiplier par MAX/255.

Cet algorithme fait intervenir les valeurs :

$$z(T_n(\mathbf{q}), n - 1),\ N(T_n(\mathbf{q}), n - 1)\ \text{et}\ z_{\text{restaurée}}(T_n(\mathbf{q}), n - 1),$$

qui parfois ne sont pas disponibles lorsque la transformation estimée $T_n(\mathbf{q})$ fait sortir un pixel de l'image (du fait du mouvement d'image).

On pourra alors choisir dans ce cas les valeurs suivantes :

$$z(T_n(\mathbf{q}), n - 1) = 0$$

$$N(T_n(\mathbf{q}), n - 1) = 0$$

$$z_{\text{restaurée}}(T_n(\mathbf{q}), n - 1) = y(\mathbf{q}, n) \text{ ou } 0$$

On décrit maintenant la quatrième combinaison, correspondant donc à la représentation de la figure 7 commentée précédemment. Il s'agit de l'application du filtre du signe avec filtre d'initialisation préalable et filtre de réduction de variance résiduelle concomitant.

Le traitement se présente comme suit :

- Initialisations : $z(\mathbf{q},0) = 0$; $T_1(\mathbf{q}) = \mathbf{q}$; $z_{\text{temp}}(\mathbf{q},0) = 0$; $z_{\text{restaurée}}(\mathbf{q},0) = 0$ ; $N(\mathbf{q},0) = 0$

$$\text{et } z_{\text{restaurée,bis}}(\mathbf{q}, 0) = 0$$

- Pour n=1 jusqu'à $n_0$, on conserve le même traitement que précédemment avec :

$$z(\mathbf{q}, n) = (1 - \alpha). y(\mathbf{q}, n) + \alpha. z(T_n(\mathbf{q}), n - 1)$$

$$N(\mathbf{q}, n) = (1 - \alpha) + \alpha. N(T_n(\mathbf{q}), n - 1)$$

et

$$z_{\text{restaurée}}(\mathbf{q}, n) = \frac{z(\mathbf{q}, n)}{N(\mathbf{q}, n)}$$

$$z_{\text{restaurée,bis}}(T(\mathbf{q}), n_0) = z_{\text{restaurée}}(\mathbf{q}, n_0)$$

- ensuite, pour $n > n_0$, le traitement devient une combinaison, pour chaque pixel d'image *n*, d'un filtre du signe :

$$z_{\text{restaurée}}(\mathbf{q}, n)$$
$$= z_{\text{restaurée}}(T_n(\mathbf{q}), n - 1) + \Delta \times \text{signe} \{y(\mathbf{q}, n) - z_{\text{restaurée}}(T_n(\mathbf{q}), n - 1)\}$$

Et d'un filtre avec oubli :

$$z_{\text{temp}}(\mathbf{q}, n) = (1 - \beta) z_{\text{restaurée}}(\mathbf{q}, n) + \beta \times z_{\text{temp}}(\mathbf{q}, n - 1)$$

De sorte que:

$$z_{\text{restaurée,bis}}(\mathbf{q}, n) = \frac{z_{\text{temp}}(\mathbf{q}, n)}{1 - \beta^{n - n_0}}$$

On peut prendre par défaut $\alpha = 0{,}95$ et $\beta = 0{,}9$

Là encore, ce traitement fait intervenir les valeurs :

$$z(\mathrm{T}_n(\mathbf{q}), n-1),\ N(\mathrm{T}_n(\mathbf{q}), n-1)\ \text{et}\ z_{\text{restaurée}}(\mathrm{T}_n(\mathbf{q}), \mathrm{n}-1),$$

qui peuvent ne pas être disponibles lorsque la transformation estimée $\mathrm{T}_n(\mathbf{q})$ fait sortir un pixel de l'image (du fait du mouvement d'image).

On pourra prendre dans ce cas les valeurs suivantes :

$$z(\mathrm{T}_n(\mathbf{q}), n-1) = 0$$

$$N(\mathrm{T}_n(\mathbf{q}), n-1) = 0$$

$$z_{\text{restaurée}}(\mathrm{T}_n(\mathbf{q}), \mathrm{n}-1) = \mathrm{y}(\mathbf{q}, \mathrm{n})\ \text{ou}\ 0$$

Il est ainsi montré que l'estimation récursive temps-réel de l'arrière-plan d'une séquence vidéo permet de restaurer des films fortement dégradés par des bruits impulsionnels (« poivre et sel » ou « neige » ou poussières réelles (papiers volants, particules, etc.) cachant un arrière-plan utile et assimilées ainsi à du bruit impulsionnel), sans dénaturer l'image d'origine comme tel est le cas d'un filtrage linéaire appliquant une forme de moyenne non souhaitable sur la succession de pixels.

Les avantages du traitement proposé ici sont multiples : la complexité et la mémoire requise sont très faibles car la mise à jour d'un pixel pour l'image *n* se fait seulement à l'aide de la valeur traitée précédente (sortie *n*-1) et du pixel courant (image *n*). L'implémentation temps-réel est donc immédiate contrairement à une réalisation à base de filtres médians classiques. De plus le traitement est directement applicable au cas d'une caméra en mouvement.

## Revendications

1. Procédé de traitement de données d'une séquence vidéo comportant du bruit, la séquence vidéo étant formée d'une succession d'images,

   **Caractérisé en ce qu'**il comporte, pour le filtrage du bruit, l'application d'un filtrage récursif dit « du signe » et donné par :

$$z(n) = z(n-1) + \Delta\ \text{ si }\ y(n) > z(n-1)$$

$$z(n) = z(n-1) - \Delta\ \text{ si }\ y(n) < z(n-1)$$

$$\text{Et } z(n) = z(n-1)\ \text{ si }\ y(n) = z(n-1)$$

   où :

   - $y(n)$ désigne un élément de la *n*-ième image dans la succession, non traitée par l'application du filtrage du signe,
   - $z(n\text{-}1)$ désigne un élément de position correspondante à $y(n)$, de la (*n*-1)-ième image dans la succession et traitée par l'application du filtrage du signe,
   - $z(n)$ désigne un élément de position correspondante à $y(n)$, de la *n*-ième image dans la succession et traitée par l'application dudit filtrage du signe, et
   - $\Delta$ est un coefficient strictement positif.

2. Procédé selon la revendication 1, dans lequel les éléments $y(n)$, $z(n\text{-}1)$ et $z(n)$ sont des pixels d'image, de même position, **caractérisé en ce que** les images de la succession sont traitées pixel par pixel.

3. Procédé selon l'une des revendications précédentes, **caractérisé en ce que** le bruit est impulsionnel, de type « poivre et sel» ou « neige ».

4. Procédé selon l'une des revendications précédentes, **caractérisé en ce que** le bruit est impulsionnel et résulte d'un rayonnement radioactif reçu par un capteur d'une caméra filmant ladite séquence vidéo.

5. Procédé selon l'une des revendications 1 et 2, **caractérisé en ce que** les images de ladite séquence vidéo présentent des objets en mouvement devant un arrière-plan d'intérêt et **en ce que** lesdits objets en mouvement dans les images sont traités comme du bruit.

6. Procédé selon l'une des revendications précédentes, dans lequel la succession d'images comporte un mouvement apparent d'un arrière-plan d'image dans la succession d'images, **Caractérisé en ce qu'**il comporte en outre :

   - intégrer le mouvement apparent comme entrée du filtrage du signe.

7. Procédé selon la revendication 6, prise en combinaison avec la revendication 2, **caractérisé en ce que** l'application du filtrage du signe en cas de mouvement apparent est donnée par :

$$z(\mathbf{q}, n) = z(T_n(\mathbf{q}), n - 1) + \Delta \text{ si } y(\mathbf{q}, n) > z(T_n(\mathbf{q}), n - 1)$$

$$z(\mathbf{q}, n) = z(T_n(\mathbf{q}), n - 1) - \Delta \ \text{ si } y(\mathbf{q}, n) < z(T_n(\mathbf{q}), n - 1)$$

$$z(\mathbf{q}, n) = z(T_n(\mathbf{q}), n - 1) \text{ si } y(\mathbf{q}, n) = z(T_n(\mathbf{q}), n - 1)$$

avec $z(\mathbf{q},n)$ les valeurs prises par la $n$-ième image au pixel de coordonnées vectorielles $\mathbf{q}$ et $T_n$ l'estimation de la transformation entre l'image précédente de rang $n$-1 et l'image courante de rang n dans la succession.

8. Procédé selon l'une des revendications précédentes, **caractérisé en ce que**, pour de premières images de la succession jusqu'à une $n_0$-ième image, on applique un filtre temporel à facteur d'oubli, sans appliquer de filtrage du signe, ce filtre temporel à facteur d'oubli étant donné par:

$$z(\mathbf{q}, n) = \frac{z_{\text{temp}}(\mathbf{q}, n)}{N(\mathbf{q}, n)}$$

avec $z_{\text{temp}}(\mathbf{q},n) = (1 - \alpha).y(\mathbf{q},n) + \alpha.z_{\text{temp}}(T_n(\mathbf{q}),n - 1)$
et $N(\mathbf{q},n) = (1 - \alpha) + \alpha.N(T_n(\mathbf{q}), n - 1)$,
$z_{\text{temp}}(\mathbf{q},n)$ étant une variable temporaire, et $\alpha$ étant un facteur d'oubli compris entre 0 et 1,
$z(\mathbf{q},n)$ étant alors les valeurs prises par la $n$-ième image au pixel de coordonnées vectorielles $\mathbf{q}$, et $T_n$ l'estimation d'une transformation par mouvement éventuel entre l'image précédente de rang $n$-1 et l'image courante de rang $n$ dans la succession, avec n inférieur à $n_0$.

9. Procédé selon la revendication 8, **caractérisé en ce que**, en absence de mouvement entre les images successives jusqu'à l'image $n_0$, le filtre temporel à facteur d'oubli est donné par:

$$z(n) = \frac{z_{\text{temp}}(n)}{1 - \alpha^n}, \text{ avec } z_{\text{temp}}(n) = (1 - \alpha)y(n) + \alpha z_{\text{temp}}(n - 1)$$

$z_{\text{temp}}(n)$ étant une variable temporaire, et $\alpha$ étant un facteur d'oubli compris entre 0 et 1.

10. Procédé selon l'une des revendications précédentes, **caractérisé en ce que**, au moins pour des images de la succession qui suivent une $n_0$-ième image, on applique la combinaison du filtrage du signe à un filtre temporel à facteur d'oubli, le résultat de ladite combinaison étant donné par:

$$s(n) = \frac{w_{\text{temp}}(n)}{1 - \beta^{n-n_0+1}}$$

$w_{\text{temp}}(n)$ étant une variable temporaire donnée par :
$w_{\text{temp}}(n)$ = (1 - $\beta$)$z(n)$ + $\beta w_{\text{temp}}$(n - 1), où $z(n)$ est le résultat de l'application du filtrage du signe, et $\beta$ étant un facteur d'oubli compris entre 0 et 1.

**11.** Procédé selon l'une des revendications précédentes, **caractérisé en ce qu'**on choisit une valeur du coefficient $\Delta$ en fonction d'une valeur maximale Imax de niveau de couleur prise par les éléments d'image, et **en ce que** le coefficient $\Delta$ est inférieur à 20 Imax/255.

**12.** Procédé selon la revendication 11, **caractérisé en ce que** le coefficient $\Delta$ est compris entre 0 et 5 Imax/255.

**13.** Programme informatique comportant des instructions pour la mise en œuvre du procédé selon l'une des revendications 1 à 12, lorsque lesdites instructions sont exécutées par un processeur.

**14.** Dispositif comportant une unité de traitement pour la mise en œuvre du procédé selon l'une des revendications 1 à 12.

**Patentansprüche**

**1.** Verfahren zur Verarbeitung von Daten einer Videosequenz, die Rauschen aufweist, wobei die Videosequenz aus einer Folge von Bildern gebildet wird,
**dadurch gekennzeichnet, dass** es zur Filterung des Rauschens die Anwendung einer rekursiven Filterung umfasst, die als "Vorzeichenfilterung" bezeichnet wird und für die gilt: und

$$z(n) = z(n - 1) + \Delta, wenn\ y(n) > z(n - 1)$$

$$z(n) = z(n - 1) - \Delta, wenn\ y(n) < z(n - 1)$$

$$z(n) = z(n - 1)\ wenn\ y(n) = z(n - 1)$$

wobei gilt:

- $y(n)$ bezeichnet ein Element des n-ten Bildes in der Folge, das nicht durch die Anwendung der Vorzeichenfilterung verarbeitet wurde,
- $z(n - 1)$bezeichnet ein Element mit der entsprechenden Position zu $y(n)$ aus dem (n - 1)-ten Bild in der Folge, das durch die Anwendung der Vorzeichenfilterung bearbeitet wurde,
- $z(n)$ bezeichnet ein entsprechendes Positionselement zu $y(n)$ des n-ten Bildes in der Folge, das durch Anwendung der Vorzeichenfilterung bearbeitet wurde, und
- $\Delta$ ist ein streng positiver Koeffizient.

**2.** Verfahren nach Anspruch 1, wobei die Elemente $y(n)$, $z(n - 1)$ und $z(n)$ Bildpixel mit gleicher Position sind, **dadurch gekennzeichnet, dass** die Bilder in der Folge Pixel für Pixel verarbeitet werden.

**3.** Verfahren nach einem der vorhergehenden Ansprüche, **dadurch gekennzeichnet, dass** das Rauschen impulsartig ist, vom Typ "Salz und Pfeffer" oder "Schnee".

**4.** Verfahren nach einem der vorhergehenden Ansprüche, **dadurch gekennzeichnet, dass** das Rauschen impulsartig ist und von radioaktiver Strahlung herrührt, die von einem Sensor einer die Videosequenz aufnehmenden Kamera empfangen wird.

**5.** Verfahren nach einem der Ansprüche 1 und 2, **dadurch gekennzeichnet, dass** die Bilder der Videosequenz sich bewegende Objekte vor einem untersuchten Hintergrund zeigen und dass die sich bewegenden Objekte in den Bildern als Rauschen behandelt werden.

**6.** Verfahren nach einem der vorhergehenden Ansprüche, wobei die Folge von Bildern eine erkennbare Bewegung eines Bildhintergrunds in der Folge von Bildern umfasst, **dadurch gekennzeichnet, dass** es ferner umfasst:

- Integrieren der erkennbaren Bewegung als Input für die Filterung des Zeichens.

**7.** Verfahren nach Anspruch 6 in Verbindung mit Anspruch 2, **dadurch gekennzeichnet, dass** die Anwendung der Vorzeichenfilterung bei erkennbarer Bewegung gegeben ist durch:

$$z\,(\boldsymbol{q},n) = z\,(T_n(\boldsymbol{q}),n-1) + \Delta, wenn\, y(\boldsymbol{q},n) \,>\, z\,(T_n(\boldsymbol{q}),n-1)$$

$$z\,(\boldsymbol{q},n) = z\,(T_n(\boldsymbol{q}),n-1) - \Delta, wenn\, y(\boldsymbol{q},n) \,<\, z\,(T_n(\boldsymbol{q}),n-1)$$

$$z\,(\boldsymbol{q},n) = z\,(T_n(\boldsymbol{q}),n-1), wenn\, y(\boldsymbol{q},n) \,=\, z\,(T_n(\boldsymbol{q}),n-1)$$

mit $z(\boldsymbol{q},n)$ für die Werte, die das n-te Bild am Pixel mit der Vektorkoordinate $\boldsymbol{q}$ annimmt, und $T_n$ für die Schätzung der Transformation zwischen dem vorhergehenden Bild mit dem Rang $n$ - 1 und dem aktuellen Bild mit dem Rang $n$ in der Folge.

**8.** Verfahren nach einem der vorhergehenden Ansprüche, **dadurch gekennzeichnet, dass** auf erste Bilder der Folge bis zu einem Bild $n_0$ ein Zeitfilter mit Vergessensfaktor angewendet wird, ohne eine Vorzeichenfilterung anzuwenden, wobei der Zeitfilter mit Vergessensfaktor gegeben ist durch:

$$z(\boldsymbol{q},n) = \frac{z_{temp}(\boldsymbol{q},n)}{N\,(\boldsymbol{q},n)}$$

mit $z_{temp}(\boldsymbol{q},n) = (1 - \alpha).y(\boldsymbol{q},n) + \alpha.z_{temp}(T_n(\boldsymbol{q}), n - 1)$ und $N(\boldsymbol{q},n) = (1 - \alpha) + \alpha.N(T_n(\boldsymbol{q}), n - 1)$,
wobei $z_{temp}(\boldsymbol{q},n)$ eine temporäre Variable ist und $\alpha$ ein Vergessensfaktor zwischen 0 und 1 ist, wobei $z(q,n)$ Werte sind, die das $n$-te Bild am Pixel mit der Vektorkoordinate $\boldsymbol{q}$ annimmt, und $T_n$ die Schätzung einer Transformation durch eine mögliche Bewegung zwischen dem vorhergehenden Bild mit dem Rang $n$ - 1 und dem aktuellen Bild mit dem Rang $n$ in der Folge ist, wobei $n$ kleiner ist als n0.

**9.** Verfahren nach Anspruch 8, **dadurch gekennzeichnet, dass** bei fehlender Bewegung zwischen den aufeinanderfolgenden Bildern bis zum Bild $n_0$ der Zeitfilter mit Vergessensfaktor gegeben ist durch:

$$z(n) = \frac{z_{temp}(n)}{1-\alpha^n} \text{ mit } z_{temp}\,(n) = (1-\alpha)y(n) + \alpha z_{temp}(n-1)$$

wobei $z_{temp}(n)$ eine temporäre Variable ist und $\alpha$ ein Vergessensfaktor zwischen 0 und 1 ist.

**10.** Verfahren nach einem der vorhergehenden Ansprüche, **dadurch gekennzeichnet, dass** wenigstens für Bilder in der Folge, die auf ein Bild $n_0$ folgen, die Kombination der Vorzeichenfilterung auf einen Zeitfilter mit Vergessensfaktor angewendet wird, wobei das Ergebnis dieser Kombination gegeben ist durch:

$$s(n) = \frac{w_{temp}(n)}{1 - \beta^{n-n_0+1}}$$

wobei gilt:
$w_{temp}(n)$ ist eine temporäre Variable, die gegeben ist durch:

$w_{temp}(n) = (1 - \beta)z(n) + \beta w_{temp}(n - 1)$, wobei $z(n)$ das Ergebnis der Anwendung der Vorzeichenfilterung ist, und ß ein Vergessensfaktor zwischen 0 und 1 ist.

**11.** Verfahren nach einem der vorhergehenden Ansprüche, **dadurch gekennzeichnet, dass** ein Wert des Koeffizienten $\Delta$ in Abhängigkeit von einem maximalen Farbpegelwert Imax, der von den Bildelementen angenommen wird, gewählt wird, und dass der Koeffizient $\Delta$ kleiner als 20 Imax/255 ist.

**12.** Verfahren nach Anspruch 11, **dadurch gekennzeichnet, dass** der Koeffizient $\Delta$ zwischen 0 und 5 Imax/255 liegt.

**13.** Computerprogramm mit Anweisungen zur Durchführung des Verfahrens nach einem der Ansprüche 1 bis 12, wenn diese Anweisungen von einem Prozessor ausgeführt werden.

**14.** Vorrichtung mit einer Verarbeitungseinheit zur Durchführung des Verfahrens nach einem der Ansprüche 1 bis 12.

**Claims**

**1.** A data processing method is proposed for a video sequence comprising noise, where the video sequence is formed of a succession of images,
**characterized in that** it comprises, for filtering of the noise, application of a recursive filter hereafter called "sign filter" and given by:

$$z(n) = z(n-1) + \Delta \ \text{ if } \ y(n) > z(n-1)$$

$$z(n) = z(n-1) - \Delta \ \text{ if } \ y(n) < z(n-1)$$

and

$$z(n) = z(n-1) \ \text{ if } \ y(n) = z(n-1)$$

where:

- $y(n)$ designates an element from the $n^{th}$ image in the succession, not processed by application of the sign filter;
- $z(n-1)$ designates a position element corresponding to $y(n)$, from the $(n-1)^{th}$ image in the succession, and processed by application of the sign filter;
- $z(n)$ designates a position element corresponding to $y(n)$, from the $n^{th}$ image in the succession, and processed by application of said sign filter, and
- $\Delta$ is a strictly positive coefficient.

**2.** The method according to claim 1, wherein the elements $y(n)$, $z(n-1)$ and $z(n)$ are image pixels, in the same position, **characterized in that** the images from the succession are processed pixel by pixel.

**3.** The method according to any one of the preceding claims, **characterized in that** the noise is "salt-and-pepper" or "snow" type impulse noise.

**4.** The method according to any one of the preceding claims, **characterized in that** the noise is impulse and is a result of radioactive radiation received by a sensor of a camera filming said video sequence.

**5.** The method according to one of claims 1 and 2, **characterized in that** the images of said video sequence have objects moving in front of a background of interest and **in that** said objects moving in the images are treated as noise.

**6.** The method according to any one of the preceding claims, wherein the succession of images comprises an apparent movement of an image background in the succession of images,
**characterized in that** it further comprises:

- incorporating the apparent movement as input for the sign filter.

7. The method according to claim 6, taken in combination with claim 2, **characterized in that** the application of the sign filter in case of apparent movement is given by:

$$z(\mathbf{q}, n) = z(\mathrm{T}_n(\mathbf{q}), n - 1) + \Delta \text{ if } y(\mathbf{q}, n) > z(\mathrm{T}_n(\mathbf{q}), n - 1)$$

$$z(\mathbf{q}, n) = z(\mathrm{T}_n(\mathbf{q}), n - 1) - \Delta \text{ if } y(\mathbf{q}, n) < z(\mathrm{T}_n(\mathbf{q}), n - 1)$$

$$z(\mathbf{q}, n) = z(\mathrm{T}_n(\mathbf{q}), n - 1) \text{ if } y(\mathbf{q}, n) = z(\mathrm{T}_n(\mathbf{q}), n - 1)$$

with $z(\mathbf{q},n)$ the values taken by the $n^{\text{th}}$ image at the pixel with vector coordinates $\mathbf{q}$ and $T_n$ the estimate of the transformation between the preceding image with rank $n$ - 1 and the current image with rank $n$ in the succession.

8. The method according to any one of the preceding claims, **characterized in that** for the first images from the succession until the $n_0^{\text{th}}$ image, a forgetting-factor temporal filter, without applying sign filtering, is applied, where this forgetting-factor temporal filter is given by:

$$z(\mathbf{q}, n) = \frac{z_{\text{temp}}(\mathbf{q}, n)}{N(\mathbf{q}, n)}$$

where $z_{\text{temp}}(\mathbf{q},n) = (1 - \alpha) \cdot y(\mathbf{q},n) + \alpha \cdot z_{\text{temp}}(T_n(\mathbf{q}), n - 1)$
and $N(\mathbf{q},n) = (1 - \alpha) + \alpha \cdot N(T_n(\mathbf{q}), n - 1)$;
$z_{\text{temp}}(\mathbf{q},n)$ is a time variable and $\alpha$ is a forgetting factor included between 0 and 1.
with $z(\mathbf{q},n)$ then being the values taken by the $n^{\text{th}}$ image at the pixel with vector coordinates $\mathbf{q}$ and $T_n$ the estimate of a transformation by possible movement between the preceding image with rank $n$ - 1 and the current image with rank $n$ in the succession, with $n$ less than $n_0$.

9. The method according to claim 8, **characterized in that** if there isn't any movement between successive images up to the image $n_0$, the forgetting-factor temporal filter is given by:

$$z(n) = \frac{z_{\text{temp}}(n)}{1 - \alpha^n}, \text{ with } z_{\text{temp}}(n) = (1 - \alpha)y(n) + \alpha z_{\text{temp}}(n - 1)$$

$z_{\text{temp}}(n)$ is a time variable and $\alpha$ is a forgetting factor included between 0 and 1.

10. The method according to any one of the preceding claims, **characterized in that** at least for images from the succession which follows a $n_0^{\text{th}}$ image, the combination of the sign filter with a forgetting-factor temporal filter is applied, where the result of this combination is given by:

$$s(n) = \frac{w_{\text{temp}}(n)}{1 - \beta^{n - n_0 + 1}}$$

where $w_{\text{temp}}(n)$ is a temporal variable given by:
$w_{\text{temp}}(n) = (1 - \beta)z(n) + \beta w_{\text{temp}}(n - 1)$, where $z(n)$ is the result of the application of the sign filter, and where $\beta$ is a forgetting factor included between 0 and 1.

11. The method according to any one of the preceding claims, **characterized in that** a value of the coefficient $\Delta$ is chosen depending on a maximum value, $I_{max}$, of color level taken by the image elements and **in that** the coefficient $\Delta$ is less than $20 \cdot I_{max}/255$.

12. The method according to claim 12, **characterized in that** the coefficient $\Delta$ is included between 0 and $5 \cdot I_{max}/255$.

13. A computer program comprising instructions for implementation of the method according to one of claims 1 to 12, when said instructions are executed by a processor.

**14.** A device comprising a processing unit for implementation of the method according to one of claims 1 to 12.

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. REZA.** Adaptive Noise Filetring of Image Sequences in Real Time. *WSEAS Transactions on Systems,* Avril 2013, vol. 12 (4